# EUROPEAN PATENT SPECIFICATION

(11) **EP 4 283 775 B1**
(45) Date of publication and mention of the grant of the patent: **02.09.2026**
(21) Application number: 22842405.7
(22) Date of filing: 11.07.2022
(51) Int. Cl.: H01M 50/517, H01M 10/613, H01M 10/625, H01M 10/653, H01M 10/6553, H01M 10/6554, H01M 10/658, H01M 50/20, H01M 50/213, H01M 50/249, H01M 50/50, H01M 50/505, H01M 50/522

(54) **USE OF A BATTERY PACK**
VERWENDUNG EINES BATTERIEPACKS
UTILISATION D'UN BLOC-BATTERIE

(30) Priority: 15.07.2021 KR 20210093113
(43) Date of publication of application: 29.11.2023
(73) Proprietor: LG Energy Solution, Ltd., Seoul 07335 (KR)
(72) Inventor: YUN, Sun-Woo, Daejeon 34122 (KR); HWANG, Sung-Tack, Daejeon 34122 (KR)
(74) Representative: Goddar, Heinz J.
(86) International application number: PCT/KR2022/010070
(87) International publication number: WO 2023/287143

(56) References cited:
- EP-A1- 3 343 672
- EP-A2- 2 505 419
- WO-A1-2021/029549
- CN-A- 109 367 405
- JP-A- 2018 093 711
- KR-A- 20120 110 002
- KR-A- 20180 013 460
- KR-A- 20210 066 528
- KR-B1- 102 204 302
- US-A1- 2019 067 763

## Description

### TECHNICAL FIELD

The present disclosure relates to a battery pack and a vehicle comprising the same, and more particularly, to a battery pack including a busbar unit capable of heat dissipation and a vehicle comprising the same.

### BACKGROUND ART

With the technology development and growing demand for mobile devices, the demand for secondary batteries as an energy source is sharply increasing, and among secondary batteries, nickel-cadmium batteries or hydrogen ion batteries have been used, but recently, compared to nickel-based secondary batteries, lithium secondary batteries are being widely used since they have little or no memory effect so recharging can be done whenever it is convenient, the self-discharge rate is very low and the energy density is high.

A lithium secondary battery usually uses a lithium-based oxide and a carbon material for a positive electrode active material and a negative electrode active material, respectively. The lithium secondary battery includes an electrode assembly including a positive electrode plate and a negative electrode plate coated with the positive electrode active material and the negative electrode active material, respectively, with a separator interposed between the positive electrode plate and the negative electrode plate, and a packaging or a battery case in which the electrode assembly is hermetically received together with an electrolyte solution.

The lithium secondary battery includes positive and negative electrodes and the separator and the electrolyte interposed between them, and is classified into a Lithium Ion Battery (LIB) and a Polymer Lithium Ion Battery (PLIB) according to the types of the positive and negative electrode active materials. In general, the electrode of the lithium secondary battery may be formed by applying the positive or negative electrode active material to a current collector of an aluminum or copper sheet, mesh, film, foil and drying.

WO 2021/029549A1, EP 3343672A1 and US 2019/067763A1 disclose battery packs comprising busbar members electrically connecting battery cells and/or battery modules, wherein a heat dissipation member contacts the busbar members for transferring heat from the busbar members to a heat sink or cooling device.

A battery pack may include a busbar connected to a battery module to operate an object such as a vehicle, and another busbar connected to the battery module to charge the battery module.

However, as higher current is used, a larger amount of heat is generated from the busbar, which increases the cross-sectional area of the busbar, resulting in increased weight and cost of the battery pack.

### DISCLOSURE

### Technical Problem

The present disclosure is directed to using a battery pack including a busbar unit capable of heat dissipation to reduce the cross-sectional area of the busbar and reduce the size and cost of the battery pack and using the battery pack in a vehicle comprising the same.

### Technical Solution

The problem is solved by a use of a battery pack according to claim 1. There is provided a battery pack including a battery module including a plurality of battery cells; a case in which the battery module is received; and a busbar unit connected to the battery module, wherein the busbar unit is used for electrical connection and heat dissipation.

Additionally, the busbar unit includes a first busbar member to connect an object to the battery module to operate the object; a second busbar member to connect the battery module to a charging member for charging the battery module; and an insulating heat dissipation member to connect the first busbar member to the second busbar member, and used for electrical insulation and heat transfer.

The first busbar member and the second busbar member are configured such that, when one of the first busbar member and the second busbar member is used, the other is not in use.

Additionally, the battery pack may further include a relay member coupled to the busbar unit; and a fastening member to fasten the busbar unit to the relay member, the first busbar member and the second busbar member may be disposed on the relay member, and the insulating heat dissipation member may be disposed above the first busbar member and the second busbar member.

Additionally, the relay member may include a first relay member coupled to the first busbar member and a second relay member coupled to the second busbar member, the fastening member may include a first fastening member coupled to the first busbar member and a second fastening mmeber coupled to the second busbar member, the first busbar member and the first relay member may be fastened to a first end of the insulating heat dissipation member by the first fastening member, and the second busbar member and the second relay member may be fastened to a second end of the insulating heat dissipation member by the second fastening member.

Additionally, the insulating heat dissipation member may be H-shaped.

Additionally, the insulating heat dissipation member may be made of a ceramic material.

Additionally, the fastening member may be a bolt, and a rubber ring may be interposed between the bolt and the insulating heat dissipation member.

Additionally, the fastening member may be a bolt, and the battery pack may include a bushing member into which the bolt is inserted.

Additionally, the bushing member may include a body having a hollow into which the bolt is inserted; and protrusions which protrude from the body toward the bolt and come into contact with the bolt.

Additionally, the body may have a plurality of through-hole shaped cut portions between the protrusions.

Additionally, a buffer space may be formed between the bushing member and the bolt.

Additionally, the battery pack may be comprised in a vehicle.

### Advantageous Effects

According to the present invention, the busbar unit is capable of heat dissipation, thereby reducing the cross-sectional area of the busbar and reducing the size and cost of the battery pack.

### DESCRIPTION OF DRAWINGS

FIG. 1 is a plan view showing the inner parts of a battery pack according to an embodiment of the present invention.
FIG. 2 is a perspective view of a busbar unit in a battery pack according to an embodiment of the present invention.
FIG. 3 is a plan view of the busbar unit of FIG. 2.
FIG. 4 is a cross-sectional view of FIG. 3 taken along the line A-A'.
FIG. 5 is a perspective view of a bushing member of FIG. 4.
FIG. 6 is a cross-sectional view of FIG. 5 taken along the line B-B'.
FIG. 7 is an enlarged view of section X in FIG. 4.
FIG. 8 is a perspective view of another embodiment of the bushing member of FIG. 5.
FIG. 9 is a cross-sectional view of FIG. 8 taken along the line C-C'.

### BEST MODE

Hereinafter, exemplary embodiments of the present invention will be described in detail with reference to the accompanying drawings.

The size of each element or particular parts of the element in the drawings is exaggerated or omitted or schematically illustrated for convenience and clarity of description. Accordingly, the size of each element does not necessarily reflect the actual size. When it is determined that a certain detailed description of relevant known functions or components may unnecessarily obscure the subject matter of the present disclosure, the description is omitted.

The term 'couple' or 'connect' as used herein includes not only a direct coupling or connection of an element to another element but also an indirect coupling or connection of an element to another element through a connection member.

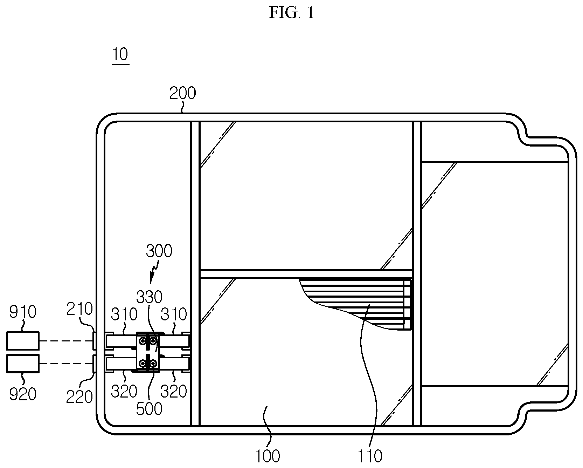

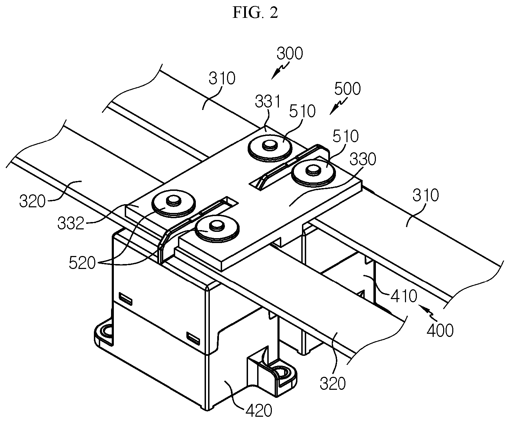

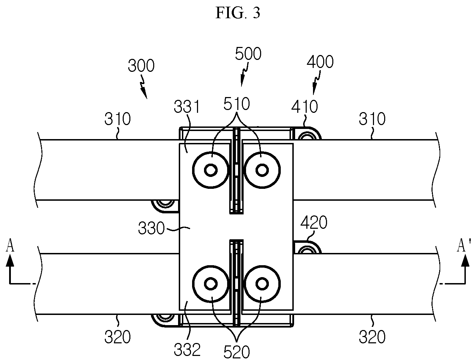

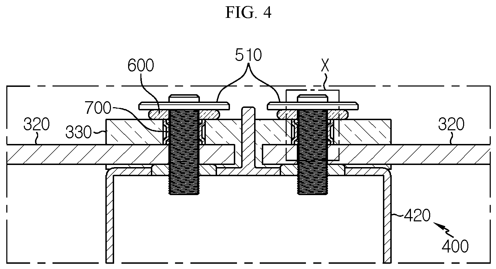

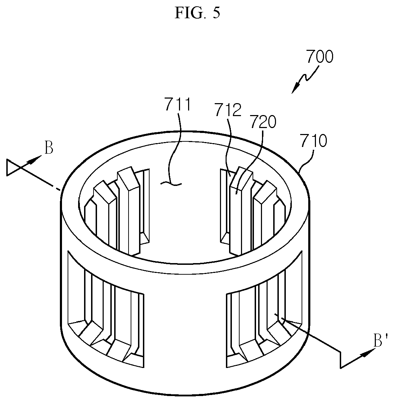

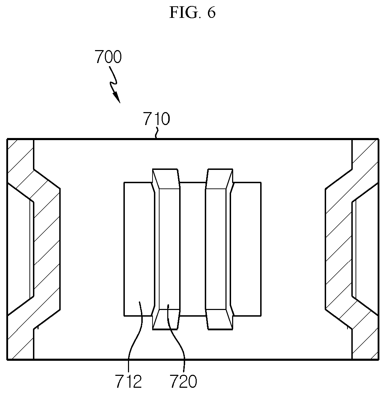

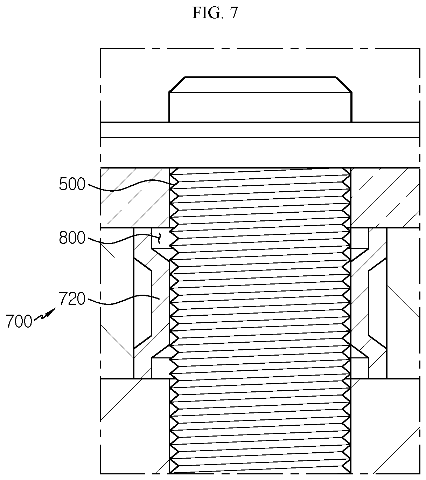

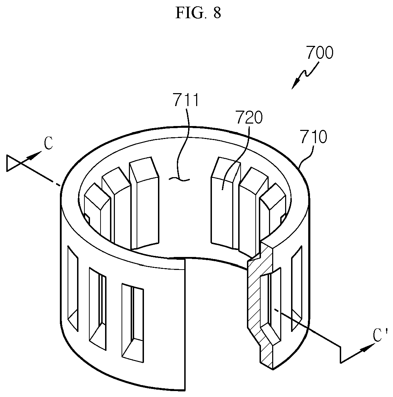

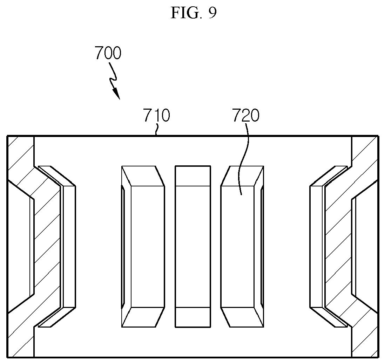

FIG. 1 is a plan view showing the inner parts of a battery pack according to an embodiment of the present invention, FIG. 2 is a perspective view of a busbar unit in the battery pack according to an embodiment of the present invention, FIG. 3 is a plan view of the busbar unit of FIG. 2, FIG. 4 is a cross-sectional view of FIG. 3 taken along the line A-A', FIG. 5 is a perspective view of a bushing member of FIG. 4, FIG. 6 is a cross-sectional view of FIG. 5 taken along the line B-B', FIG. 7 is an enlarged view of section X in FIG. 4, FIG. 8 is a perspective view of another embodiment of the bushing member of FIG. 5, and FIG. 9 is a cross-sectional view of FIG. 8 taken along the line C-C'.

Referring to the drawings, the battery pack 10 according to an embodiment of the present invention includes a battery module 100, a case 200 and the busbar unit 300.

Referring to FIG. 1, the battery module 100 includes a plurality of battery cells 110. The battery cell 110 may have a stack of unit cells, each unit cell including a positive electrode plate, a separator and a negative electrode plate arranged in that order, or a stack of bi-cells, each bi-cell including a positive electrode plate, a separator, a negative electrode plate, a separator, a positive electrode plate, a separator and a negative electrode plate arranged in that order, according to the battery capacity.

Additionally, the battery cells 110 may include electrode leads. The electrode leads may be terminals that are exposed to the outside and connected to an external device, and may be made of a conductive material.

The electrode leads may include positive and negative electrode leads. The positive and negative electrode leads may be disposed in the same direction or opposite directions along the lengthwise direction of the battery cells 110.

The battery module 100 may include a plurality of cartridges in which the battery cells 110 are received. Each cartridge may be made by plastic injection molding, and the plurality of cartridges having a receiving portion for receiving the battery cells 110 may be stacked.

A cartridge assembly including the stack of cartridges may include a connector element or a terminal element.

The connector element may include, for example, various types of electrical connection components or connection members to connect to a Battery Management System (BMS) (not shown) that provides data associated with the voltage or temperature of the battery cells 110.

Additionally, the terminal element may be a main terminal connected to the battery cells 110 and may include a positive terminal and a negative terminal. The terminal element may include a terminal bolt to electrically connect to an external device.

The case 200 accommodates at least one battery module 100. The plurality of battery modules 100 may be stacked in the case 200 or may be arranged in various patterns in the case 200.

The case 200 accommodates the plurality of battery modules 100 to protect them. That is, the case 200 covers all the battery modules 100 to protect them from external vibrations or impacts.

The case 200 may have a shape that conforms to the shape of the battery module 100. For example, when the stacked battery modules 100 have a hexahedral shape as a whole, the case 200 may have a hexahedral shape that conforms to it. However, the present invention is not limited thereto.

For example, the case 200 may be made by bending a metal plate, and thus the case 200 may be integrally formed. Here, when the case 200 is integrally formed, the coupling process is simple and straightforward.

Alternatively, the split type case 200 may be coupled using a variety of methods, for example, weld, rivet, bolt, pin, bracket or moment joining. Additionally, the battery pack 10 may include different types of devices for controlling the charge/discharge of the battery module 100, for example, a BMS, a current sensor and a fuse.

The busbar unit 300 is connected to the battery module 100. The busbar unit 300 is electrically connected to the battery module 100 and is capable of heat dissipation.

Referring to FIGS. 2 and 3, the busbar unit 300 includes a first busbar member 310, a second busbar member 320 and an insulating heat dissipation member 330.

The first busbar member 310 is configured to connect an object 910 to the battery module 100 to operate the object 910 (see FIG. 1). The first busbar member 310 may be connected to the object 910 through a connection terminal 210. Here, various types of objects 910 may be connected to the battery module 100.

For example, the object 910 may be an electric vehicle, and when the object 910 is an electric vehicle, the first busbar member 310 is configured to move electrical energy used to operate the electric vehicle from the battery module 100 to the electric vehicle.

However, the object 910 is not limited to the electric vehicle, and for convenience of description, the following description is made by taking the electric vehicle as an example of the object 910.

The second busbar member 320 is configured to connect the battery module 100 to a charging member 920 (see FIG. 1) for charging the battery module 100. The second busbar member 320 may be connected to the charging member 920 through a charging terminal 220.

That is, electrical energy for operating the object 910 or the electric vehicle moves from the battery module 100 to the electric vehicle through the first busbar member 310, and when the battery module 100 is charged after the end of the operation of the electric vehicle, electrical energy for charging moves from the charging member 920 to the battery module 100 through the second busbar member 320.

The insulating heat dissipation member 330 is used for electrical insulation and heat transfer, and connects the first busbar member 310 to the second busbar member 320. To this end, the insulating heat dissipation member 330 may be made of a ceramic material.

However, the material of the insulating heat dissipation member 330 is not limited to the ceramic material, and the material of the insulating heat dissipation member 330 may include various types of materials having the insulation and heat dissipation properties.

As described above, during the operation of the electric vehicle, electrical energy moves from the battery module 100 to the electric vehicle through the first busbar member 310, so heat is generated from the first busbar member 310. In particular, since the electric vehicle uses high current, there is an increase in the amount of heat generated.

Here, since the second busbar member 320 is not used while electrical energy is moving through the first busbar member 310, heat generated from the first busbar member 310 may move to the second busbar member 320 through the insulating heat dissipation member 330 and into the outside atmosphere.

In this instance, since the insulating heat dissipation member 330 is electrically insulated, heat is transferred from the first busbar member 310 to the second busbar member 320, but electricity does not move. Hereinafter, when heat is transferred from the second busbar member 320 to the first busbar member 310, likewise, electricity does not move.

Additionally, during the charging of the electric vehicle, electrical energy moves from the charging member 920 to the battery module 100 through the second busbar member 320, and heat is generated from the second busbar member 320.

Here, since the first busbar member 310 is not used while electrical energy moves through the second busbar member 320, heat generated from the second busbar member 320 may move to the first busbar member 310 through the insulating heat dissipation member 330 and into the outside atmosphere.

That is, when any one of the first busbar member 310 and the second busbar member 320 is used, the other is not used, and heat generated from the busbar member being used may move to the busbar member not in use through the insulating heat dissipation member 330 and into the outside atmosphere.

Referring to FIGS. 2 and 4, a relay member 400 may be coupled to the busbar unit 300. The first busbar member 310 and the second busbar member 320 may be disposed on the relay member 400. Additionally, the insulating heat dissipation member 330 may be disposed above the first busbar member 310 and the second busbar member 320.

The relay member 400 may include a first relay member 410 coupled to the first busbar member 310 and a second relay member 420 coupled to the second busbar member 320.

A fastening member 500 fastens the busbar unit 300 to the relay member 400. The fastening member 500 may come in various types, and for example, may include a bolt and nut. The nut may be coupled to the relay member 400, or the nut may be integrally formed in the relay member 400 itself.

However, the fastening member 500 is not limited to the bolt and nut, and the fastening member 500 may include a variety of known structures. However, for convenience of description, the following description is made by taking the bolt and the nut integrally formed in the relay member 400 as an example of the fastening member 500.

The fastening member 500 may include a first fastening member 510 coupled to the first busbar member 310 and a second fastening member 520 coupled to the second busbar member 320.

The first busbar member 310 and the first relay member 410 may be fastened to a first end 331 of the insulating heat dissipation member 330 by the first fastening member 510. Additionally, the second busbar member 320 and the second relay member 420 may be fastened to a second end 332 of the insulating heat dissipation member 330 by the second fastening member 520.

Here, referring to FIGS. 2 and 3, the insulating heat dissipation member 330 may be H-shaped. However, the shape of the insulating heat dissipation member 330 is not limited to the H shape.

As described above, the insulating heat dissipation member 330 may be made of a ceramic material for good electrical insulation and heat transfer. However, the ceramic material may be vulnerable to damage due to its brittleness.

Here, a rubber ring 600 and a bushing member 700 may be provided to prevent damage to the ceramic insulating heat dissipation member 330.

Referring to FIG. 4, the rubber ring 600 is interposed between the fastening member 500 or the bolt and the insulating heat dissipation member 330. The rubber ring 600 protects the insulating heat dissipation member 330 from vertical impacts or vibrations.

Additionally, the fastening member 500 or the bolt is inserted into the bushing member 700. The bushing member 700 protects the insulating heat dissipation member 330 from horizontal impacts or vibrations.

Referring to FIGS. 5 to 7, the bushing member 700 may include a body 710 and protrusions 720.

The body 710 has a hollow 711, and the bolt is inserted into the hollow 711 of the body 710. The body 710 may have a plurality of through-hole shaped cut portions 712 between the protrusions 720.

The protrusions 720 are formed in the body 710, and protrude from the body 710 toward the bolt and come into contact with the bolt as shown in FIG. 7. As described above, it is possible to mitigate horizontal impacts or vibrations by the contact between the protrusions 720 and the bolt.

Referring to FIG. 7, a buffer space 800 may be formed between the bushing member 700 and the fastening member 500 or the bolt. Here, the buffer space 800 prevents the direct transfer of vibration generated from the bolt to the insulating heat dissipation member 330 to protect the insulating heat dissipation member 330.

Referring to FIGS. 8 and 9 according to another embodiment of FIGS. 5 and 6, the body 710 has the protrusions 720, and as opposed to FIGS. 5 and 6, does not have the plurality of cut portions 712.0

The foregoing description replaces the common description to the embodiment of FIGS. 5 and 6 and the embodiment of FIGS. 8 and 9.

Hereinafter, the operation and effect of the battery pack 10 according to the present invention will be described with reference to the

accompanying drawings.

The battery pack 10 includes the first busbar member 310 and the second busbar member 320 to transfer electrical energy. Here, heat generated during the transfer of electrical energy through any one busbar member moves the other busbar member through the insulating heat dissipation member 330 and into the outside atmosphere.

Additionally, the insulating heat dissipation member 330 may be made of a brittle ceramic material, and the rubber ring 600 and the bushing member 700 may be provided to prevent damage from vibration of the bolt.

Accordingly, it is possible to reduce the cross-sectional area of the busbar through heat dissipation structure, and reduce the size and cost of the battery pack 10.

A vehicle (not shown) may include the battery pack 10 described above. The battery pack 10 may be used in various types of machine or devices using electricity, and for example, may be disposed in an electric vehicle, in particular, the under floor of the electric vehicle. Here, the electric vehicle may include an electric vehicle that drives using only electricity but also a hybrid vehicle using electrical energy together with other energy sources.

### INDUSTRIAL APPLICABILITY

The present invention relates to a battery pack and a vehicle comprising the same, and in particular, can be used in the industrial applications related to secondary batteries.

## Claims

1. A use of a battery pack (10), wherein the battery pack (10) comprises:
a battery module (100) including a plurality of battery cells (110);
a case (200) in which the battery module (100) is received; and
a busbar unit (300) connected to the battery module (100),
wherein the busbar unit (300) is used for electrical connection and heat dissipation,
wherein the busbar unit (300) includes:
a first busbar member (310) to connect an object (910) to the battery module (100) to operate the object (910);
a second busbar member (320) to connect the battery module (100) to a charging member (920) for charging the battery module (100); and
an insulating heat dissipation member (330) to connect the first busbar member (310) to the second busbar member (320), and used for electrical insulation and heat transfer,
wherein the first busbar member (310) and the second busbar member (320) are configured such that, when one of the first busbar member (310) and the second busbar member (320) is used, the other is not in use.

2. The use of the battery pack according to claim 1, wherein the battery pack further comprising:
a relay member (400) coupled to the busbar unit (300); and
a fastening member (500) to fasten the busbar unit (300) to the relay member (400),
wherein the first busbar member (310) and the second busbar member (320) is disposed on the relay member (400), and
wherein the insulating heat dissipation member (330) is disposed above the first busbar member (310) and the second busbar member (320).

3. The use of the battery pack according to claim 2, wherein the relay member (400) includes a first relay member (410) coupled to the first busbar member (310) and a second relay member (420) coupled to the second busbar member (320),
wherein the fastening member (500) includes a first fastening member (510) coupled to the first busbar member (310) and a second fastening member coupled to the second busbar member (320),
wherein the first busbar member (310) and the first relay member (410) are fastened to a first end (331) of the insulating heat dissipation member (330) by the first fastening member (510), and
wherein the second busbar member (320) and the second relay member (420) are fastened to a second end (332) of the insulating heat dissipation member (330) by the second fastening member (520).

4. The use of the battery pack according to claim 3, wherein the insulating heat dissipation member (330) is H-shaped.

5. The use of the battery pack according to claim 2, wherein the insulating heat dissipation member (330) is made of a ceramic material.

6. The use of the battery pack according to claim 5, wherein the fastening member (500) is a bolt, and
wherein a rubber ring (600) is interposed between the bolt and the insulating heat dissipation member (330).

7. The use of the battery pack according to claim 5, wherein the fastening member (500) is a bolt, and
wherein the battery pack (10) includes a bushing member (700) into which the bolt (500) is inserted.

8. The use of the battery pack according to claim 7, wherein the bushing member (700) includes:
a body (710) having a hollow (711) into which the bolt (500) is inserted; and
protrusions (720) which protrude from the body (710) toward the bolt and come into contact with the bolt (500).

9. The use of the battery pack according to claim 8, wherein the body (710) has a plurality of through-hole shaped cut portions (712) between the protrusions (720).

10. The use of the battery pack according to claim 8, wherein a buffer space (800) is formed between the bushing member (700) and the bolt (500).

11. The use of the battery pack according to any one of claims 1 to 10, wherein the battery pack is comprised in a vehicle.

## Patentansprüche

1. Verwendung eines Batteriepacks (10), wobei der Batteriepack (10) aufweist:
ein Batteriemodul (100) umfassend mehrere Batteriezellen (110);
ein Gehäuse (200), in dem das Batteriemodul (100) aufgenommen ist; und
eine Sammelschieneneinheit (300), die mit dem Batteriemodul (100) verbunden ist,
wobei die Sammelschieneneinheit (300) zur elektrischen Verbindung und Wärmeableitung verwendet wird,
wobei die Sammelschieneneinheit (300) aufweist:
ein erstes Sammelschienenelement (310) zum Verbinden eines Objekts (910) mit dem Batteriemodul (100), um das Objekt (910) zu betreiben;
ein zweites Sammelschienenelement (320) zum Verbinden des Batteriemoduls (100) mit einem Ladeelement (920) zum Laden des Batteriemoduls (100); und
ein isolierendes Wärmeableitungselement (330) zum Verbinden des ersten Sammelschienenelements (310) mit dem zweiten Sammelschienenelement (320), das zur elektrischen Isolierung und Wärmeübertragung verwendet wird,
wobei das erste Sammelschienenelement (310) und das zweite Sammelschienenelement (320) so konfiguriert sind, dass, wenn eines von dem ersten Sammelschienenelement (310) und dem zweiten Sammelschienenelement (320) verwendet wird, das andere nicht verwendet wird.

2. Verwendung des Batteriepacks nach Anspruch 1, wobei der Batteriepack ferner aufweist:
ein Relaiselement (400), das mit der Sammelschieneneinheit (300) gekoppelt ist; und
ein Befestigungselement (500) zum Befestigen der Sammelschieneneinheit (300) an dem Relaiselement (400),
wobei das erste Sammelschienenelement (310) und das zweite Sammelschienenelement (320) an dem Relaiselement (400) angeordnet sind, und
wobei das isolierende Wärmeableitungselement (330) über dem ersten Sammelschienenelement (310) und dem zweiten Sammelschienenelement (320) angeordnet ist.

3. Verwendung des Batteriepacks nach Anspruch 2, wobei das Relaiselement (400) ein erstes Relaiselement (410), das mit dem ersten Sammelschienenelement (310) gekoppelt ist, und ein zweites Relaiselement (420), das mit dem zweiten Sammelschienenelement (320) gekoppelt ist, aufweist,
wobei das Befestigungselement (500) ein erstes Befestigungselement (510), das mit dem ersten Sammelschienenelement (310) gekoppelt ist, und ein zweites Befestigungselement, das mit dem zweiten Sammelschienenelement (320) gekoppelt ist, aufweist,
wobei das erste Sammelschienenelement (310) und das erste Relaiselement (410) an einem ersten Ende (331) des isolierenden Wärmeableitungselements (330) durch das erste Befestigungselement (510) befestigt sind, und
wobei das zweite Sammelschienenelement (320) und das zweite Relaiselement (420) an einem zweiten Ende (332) des isolierenden Wärmeableitungselements (330) durch das zweite Befestigungselement (520) befestigt sind.

4. Verwendung des Batteriepacks nach Anspruch 3, wobei das isolierende Wärmeableitungselement (330) H-förmig ist.

5. Verwendung des Batteriepacks nach Anspruch 2, wobei das isolierende Wärmeableitungselement (330) aus einem Keramikmaterial hergestellt ist.

6. Verwendung des Batteriepacks nach Anspruch 5, wobei das Befestigungselement (500) ein Bolzen ist, und
wobei ein Gummiring (600) zwischen dem Bolzen und dem isolierenden Wärmeableitungselement (330) angeordnet ist.

7. Verwendung des Batteriepacks nach Anspruch 5, wobei das Befestigungselement (500) ein Bolzen ist, und
wobei der Batteriepack (10) ein Buchsenelement (700) aufweist, in das der Bolzen (500) eingesetzt ist.

8. Verwendung des Batteriepacks nach Anspruch 7, wobei das Buchsenelement (700) aufweist:
einen Körper (710) mit einem Hohlraum (711), in den der Bolzen (500) eingesetzt ist; und
Vorsprünge (720), die von dem Körper (710) in Richtung des Bolzens vorstehen und mit dem Bolzen (500) in Kontakt kommen.

9. Verwendung des Batteriepacks nach Anspruch 8, wobei der Körper (710) mehrere durchgangslochförmige Schnittabschnitte (712) zwischen den Vorsprüngen (720) aufweist.

10. Verwendung des Batteriepacks nach Anspruch 8, wobei ein Pufferraum (800) zwischen dem Buchsenelement (700) und dem Bolzen (500) ausgebildet ist.

11. Verwendung des Batteriepacks nach einem der Ansprüche 1 bis 10, wobei der Batteriepack in einem Fahrzeug enthalten ist.

## Revendications

1. Utilisation d'un bloc-batterie (10), le bloc-batterie (10) comprenant :
un module de batterie (100) comprenant une pluralité de cellules de batterie (110) ;
un boîtier (200) dans lequel le module de batterie (100) est reçu ; et
une unité de barre omnibus (300) connectée au module de batterie (100),
l'unité de barre omnibus (300) étant utilisée pour le raccordement électrique et la dissipation thermique,
l'unité de barre omnibus (300) comprenant :
un premier élément de barre omnibus (310) pour connecter un objet (910) au module de batterie (100) afin d'utiliser l'objet (910) ;
un deuxième élément de barre omnibus (320) pour connecter le module de batterie (100) à un organe de charge (920) pour charger le module de batterie (100) ; et
un élément de dissipation thermique isolant (330) pour connecter le premier élément de barre omnibus (310) au deuxième élément de barre omnibus (320), et utilisé pour l'isolation électrique et le transfert thermique,
le premier élément de barre omnibus (310) et le deuxième élément de barre omnibus (320) étant configurés de sorte que lorsque l'on utilise un du premier élément de barre omnibus (310) et du deuxième élément de barre omnibus (320), l'autre n'est pas utilisé.

2. Utilisation du bloc-batterie selon la revendication 1, le bloc-batterie comprenant en outre :
un élément relais (400) couplé à l'unité de barre omnibus (300) ; et
un élément de fixation (500) pour fixer l'unité de barre omnibus (300) à l'élément relais (400),
le premier élément de barre omnibus (310) et le deuxième élément de barre omnibus (320) étant disposés sur l'élément relais (400), et
l'élément de dissipation thermique isolant (330) étant disposé au-dessus du premier élément de barre omnibus (310) et du deuxième élément de barre omnibus (320).

3. Utilisation du bloc-batterie selon la revendication 2, l'élément relais (400) comprenant un premier élément relais (410) couplé au premier élément de barre omnibus (310), et un deuxième élément relais (420) couplé au deuxième élément de barre omnibus (320)
l'élément de fixation (500) comprenant un premier élément de fixation (510) couplé au premier élément de barre omnibus (310), et un deuxième élément de fixation couplé au deuxième élément de barre omnibus (320),
le premier élément de barre omnibus (310) et le premier élément relais (410) étant fixés sur un premier bout (331) de l'élément de dissipation thermique isolant (330) par le premier élément de fixation (510), et
le deuxième élément de barre omnibus (320) et le deuxième élément relais (420) étant fixés à un deuxième bout (332) de l'élément de dissipation thermique isolant (330) par le deuxième élément de fixation (520).

4. Utilisation du bloc-batterie selon la revendication 3, l'élément de dissipation thermique isolant (330) étant en forme de H.

5. Utilisation du bloc-batterie selon la revendication 2, l'élément de dissipation thermique isolant (330) étant réalisé avec un matériau céramique.

6. Utilisation du bloc-batterie selon la revendication 5, l'élément de fixation (500) étant un boulon, et
une bague en caoutchouc (600) étant intercalée entre le boulon et l'élément de dissipation thermique isolant (330).

7. Utilisation du bloc-batterie selon la revendication 5, l'élément de fixation (500) étant un boulon, et
le bloc-batterie (10) comprenant un élément de douille (700) dans lequel le boulon (500) est inséré.

8. Utilisation du bloc-batterie selon la revendication 7, l'élément de douille (700) comprenant :
un corps (710) avec un creux (711) dans lequel le boulon (500) est inséré ; et
des saillies (720) dépassant du corps (710) en direction du boulon, et entrant en contact avec le boulon (500).

9. Utilisation du bloc-batterie selon la revendication 8, le corps (710) possédant une pluralité de parties évidées en forme de trou traversant (712) entre les saillies (720).

10. Utilisation du bloc-batterie selon la revendication 8, un espace tampon (800) étant formé entre l'élément de douille (700) et le boulon (500).

11. Utilisation du bloc-batterie selon une quelconque des revendications 1 à 10, le bloc-batterie étant compris dans un véhicule.
